# EUROPEAN PATENT SPECIFICATION

(11) **EP 1 572 852 B1**
(45) Date of publication and mention of the grant of the patent: **11.10.2006**
(21) Application number: 03782269.9
(22) Date of filing: 02.12.2003
(51) Int. Cl.: C11D 3/39, C11D 17/00

(54) **COATED PEROXYGEN COMPOUNDS WITH CONTROLLED RELEASE, A PROCESS FOR THEIR PREPARATION AND THEIR USE**
UMHÜLLTE PERSAUERSTOFFVERBINDUNGEN MIT GESTEUERTER FREISETZUNG, EIN VERFAHREN ZU IHRER HERSTELLUNG UND IHRE VERWENDUNG
COMPOSES PEROXYGENES ENROBES, A LIBERATION LENTE, LEUR PROCEDE DE PREPARATION ET D'UTILISATION

(30) Priority: 20.12.2002 DE 10261161; 07.05.2003 DE 10320197
(43) Date of publication of application: 14.09.2005
(73) Proprietor: Degussa AG, 40474 Düsseldorf (DE)
(72) Inventor: JAKOB, Harald, 63594 Hasselroth (DE); ZIMMERMANN, Klaus, 63517 Rodenbach (DE); OVERDICK, Ralph, 65719 Hofheim (DE); LEONHARDT, Wolfgang, 60487 Frankfurt (DE)
(86) International application number: PCT/EP2003/013535
(87) International publication number: WO 2004/056954

(56) References cited:
- WO-A-96/14388
- US-A- 5 478 488
- US-A- 5 902 682

## Description

The invention relates to coated peroxygen compounds, in particular coated sodium percarbonate particles, with at least two shell layers, which have both a high active oxygen stability in the presence of detergent constituents and a controlled release, in particular delayed release of sodium percarbonate in the aqueous phase.

The invention also provides a process for the preparation of generic coated particles, such as coated sodium percarbonate particles, wherein it is possible to obtain coated particles with a different dissolving time, the shell amount being kept constant.

The invention also provides the use of the coated peroxygen compounds, in particular coated sodium percarbonate particles, as a bleaching component in detergents, bleaching compositions and cleaning compositions, in particular those which require a delayed release of the active oxygen (Oₐ) in the aqueous phase.

"Peroxygen compounds" in this Application are to be understood as meaning those particulate substances which release active oxygen in the aqueous phase. Examples are percarbonates, perborates, persulfates, perphosphates, persilicates and solid peroxycarboxylic acids.

Among the particulate peroxygen compounds, sodium percarbonate currently occupies a prominent position, and for this reason the following statements are substantially directed towards sodium percarbonate.

Sodium percarbonate (2Na₂CO₃·3H₂O₂) is used as the active oxygen component in detergents, bleaching compositions and cleaning compositions. Because of the inadequate storage stability of sodium percarbonate in a warm-humid environment and in the presence of various washing and cleaning components, in particular silicatic builders, sodium percarbonate must be stabilized against the loss of active oxygen (Oₐ). An essential principle for the stabilization comprises surrounding the sodium percarbonate particles with a single- or multilayer shell, each shell layer comprising one or more inorganic and/or organic shell components.

Solid detergents such as are used for bleaching textiles in the home and in industry in many cases comprise an enzyme, in addition to surface-active agents and inorganic and/or organic builders and a bleaching agent, such as, in particular, sodium percarbonate. The use of enzymes is scarcely dispensed with in universal detergents, since with their aid the removal of various protective constituents from textiles can be achieved quickly and gently, even at low temperatures. The use of proteases for the removal of protein-containing soiling is particularly widespread, but nevertheless other enzymes, such as lipases, amylases, cellulases and cutinases, to which in each case other specific tasks are assigned, are also increasingly being used.

In the case of enzyme-containing detergents, the good solubility of the sodium percarbonate often acts as a disadvantage, since high concentrations of active oxygen, which can impair the action of a number of enzymes, including in particular also that of proteases, are already available in the wash liquor shortly after the start of the washing process. A sodium percarbonate with delayed release of the active oxygen has accordingly been required for enzyme-containing systems.

According to GB 174,891, for the purpose of increasing the Oₐ stability active oxygen compounds, and these also include sodium percarbonate, are sprayed with a water-glass solution and dried. Water-glass, that is to say a mixture of alkali metal silicates, is also a shell component in comparison examples in the process according to DE-OS 26 22 610. A water-glass solution with a modulus (SiO₂ to Na₂O) of 3.3 and a solids concentration of 27.5% is employed here. However, it has been found that alkali metal silicates do not have a stabilizing action in a sufficient amount even if a thick shell layer is applied to the sodium percarbonate particles.

According to DE-OS 24 17 572 a better stabilization can be achieved using mixed inorganic salts, such as a combination of sodium sulfate and sodium carbonate. According to DE-OS 26 22 610 a further improvement is achieved by additionally employing an alkali metal silicate as a third component in the coating. The products described have proved to be rapidly soluble.

According to US Patent 4,325,933 magnesium sulfate is also suitable as a shell component. As can be seen from WO 95/02555 and EP-A 0 623 553, magnesium sulfate as the sole shell component did not yet meet the stability requirements imposed on sodium percarbonate at that time. The coating of the sodium percarbonate particles described in the last two documents mentioned accordingly comprises, in addition to magnesium sulfate or a magnesium salt of a carboxylic acid, additionally an alkali metal salt from the series consisting of alkali metal carbonates, alkali metal bicarbonates and alkali metal sulfates, and as a third component an alkali metal silicate, it being possible for the shell components to be arranged in one or in several layers.

In the process according to WO 95/02555 and US-A-5 902 682 a water-glass solution with a modulus of 3.5 and a high concentration, namely 37° Bé, was used for the preparation of a separate alkali metal silicate layer. To prepare shell layers which additionally comprised sodium carbonate in addition to sodium silicate, solutions in which the content of alkali metal silicate was lower were used. No suggestion according to which the alkali metal silicate concentration of the solution to be sprayed could have an influence on the dissolving time of the sodium percarbonate coated with this can be seen either from this document or from the documents cited above.

It follows from EP 0 623 553 A1 that the rate of solution of coated sodium percarbonate particles decreases with an increasing amount of sodium silicate - in the case of a shell layer of 1.5 wt.% sodium silicate the dissolving time was stated as 3.5 minutes, in the case of a shell layer of 12.5 wt.% sodium silicate and a thin magnesium sulfate layer (1.5 wt.%) on top it was stated as 9.0 minutes. A water-glass solution with 2% SiO₂ was used here for the preparation of the first, that is to say innermost, layer, but the modulus was not disclosed.

The doctrine of WO 97/19890 is that sodium percarbonate with a single shell layer of substantially sodium sulfate has an adequate active oxygen stability if the core material has been produced by fluidized bed spray granulation. The dense particle build-up indeed led to a somewhat lower rate of solution, but this was not sufficient, as has since been found, adequately to prevent deactivation of enzymes.

To reduce the deactivating action of bleaching agents with respect to enzymes, it was proposed in WO 96/23354 to compound a detergent such that under standard conditions more than 80 wt.% of the detergent but less than 70 wt.% of the sodium percarbonate dissolves. A coated sodium percarbonate, the coating being, for example, low-melting organic substances, or a sodium percarbonate prepared by fluidized bed spray granulation, the rate of solution of which is lower than that of a sodium percarbonate produced by conventional crystallization, is employed. In practice, these systems proved to be not completely satisfactory because of an inadequate delay in the release of Oₐ and/or other problems.

In the detergents according to WO 97/45524, which comprise a surface-active cationic ester and an alkalinity system, it is also important that the alkalinity system is released in a delayed manner in the aqueous phase. The substances having an alkaline action are also to be understood as meaning bleaching agents, such as sodium percarbonate. A coating with a material which itself has a low solubility in water, as a result of which a delayed release of the sodium percarbonate is rendered possible, is regarded as a means for reducing the dissolving time. In addition to organic shell components, alkali metal and alkaline earth metal sulfates are regarded as suitable shell components for lengthening the dissolving time in this document. As the inventors of the present Application have found, the dissolving time cannot be reduced in an effective manner by the sulfates mentioned as the sole shell component.

In WO 97/45524, a coating with sodium silicate with a modulus of SiO₂ to Na₂O in the range from 1.6 : 1 to 3.4 : 1, in particular 2.8 : 1, is regarded as the preferred coating for the purpose of delayed release of sodium percarbonate. The sodium silicate is used in the form of an aqueous solution, and the sodium percarbonate coated therewith comprises 2 to 10 wt.%, in particular 3 to 5 wt.% sodium silicate, based on the coated sodium percarbonate. Instead of sodium silicate, magnesium silicate is also regarded as a suitable shell component for delaying the release of active oxygen. Indications of the manner in which sodium silicate or magnesium silicate is to be applied to sodium percarbonate cannot be found from this document. In particular, there is no indication of an expedient concentration of the alkali metal silicate solution to be used for coating sodium percarbonate. As already stated in the introduction, sodium percarbonate must also have a sufficiently high active oxygen stability, and this is under no circumstances achieved by coating solely with an alkali metal silicate.

EP 0 992 575 A1 also contains the doctrine of the possibility of lengthening the dissolving time of sodium percarbonate by alkali metal silicate: In this, 0.5 to 30 wt.% of an alkali metal silicate with a modulus of greater than 3 and less than 5 is either mixed with sodium percarbonate or applied to this in the form of a shell layer. By way of example, the shell layer comprises 9 wt.% sodium silicate. To improve the active oxygen stability, specific hydroxycarboxylic acids or dicarboxylic acids can additionally be arranged in a single or in several shell layers. Other known stabilizers from the series consisting of magnesium sulfate, sodium sulfate, sodium carbonate and sodium bicarbonate can additionally be present in the coating. The dissolving time is in the range from about 2 minutes to 300 minutes, depending on the composition of the coating. It is clear from the examples that by using a water-glass solution with a modulus of less than 3 the rate of solution can be lowered only moderately. Indications of the concentration in which the water-glass solution is to be employed in order to obtain a coated sodium percarbonate with a sufficiently long dissolving time cannot be found from this document.

The dissolving time can indeed be lengthened by application of an alkali metal silicate layer to sodium percarbonate if a large amount of alkali metal silicate is used as the shell material. However, a disadvantage of sodium percarbonate coated in this way is that at the high use amounts of alkali metal silicate required, the alkali metal silicate originating from the coating is not dissolved satisfactorily in the wash liquor and these "shells" can therefore precipitate on the laundry as greying. Such undissolved constituents can also lead to undesirable deposits in the washing machine.

The object of the present invention is to provide coated particulate peroxygen compounds which, in spite of only a thin shell layer, release the active oxygen in a delayed manner in water.

The object is, in particular, to provide improved coated sodium percarbonate particles which, with the lowest possible amount of alkali metal silicate in the coating, lead to the highest possible delay in the release of the sodium percarbonate in the aqueous phase.

According to another object, the coated particles, which, like sodium percarbonate particles, readily lose active oxygen in a humid-warm environment, should have a sufficiently high active oxygen stability during storage in a silo and in the presence of detergent constituents, in addition to the delayed release.

According to another object of the invention, a process with which particles coated according to the invention, such as, in particular, sodium percarbonate particles, are rendered accessible in a simple manner is to be provided.

According to another object it should be possible, by adjusting the process parameters during the coating of the sodium percarbonate particles, for the dissolving time to be adjusted reliably with a certain "time window" without the amount of shell material employed being increased.

Another object is directed at providing coated particles of peroxygen compounds, in particular coated sodium percarbonate particles, which release active oxygen in a relatively large amount in enzyme-containing detergents only when the enzymes have fulfilled their task.

It has been found, surprisingly, that not only the modulus of a water-glass solution to be used for coating sodium percarbonate and the amount of alkali metal silicate in the coating are of importance for the rate of solution of the coated sodium percarbonate, but also the concentration of alkali metal silicate in the water-glass solution to be applied and additionally the arrangement of at least two shell components, of which one is primarily responsible for the active oxygen stability and the second is responsible for controlling the dissolving time, in at least two shell layers.

It has furthermore been found that by the choice of concentration of alkali metal silicate in the water-glass solution to be used, the dissolving time can be varied widely for the same amount of alkali metal silicate in the shell layer. At a fixed amount of alkali metal silicate in the coating, the dissolving time can be increased greatly if sodium percarbonate is coated using an aqueous alkali metal silicate solution which has, instead of an alkali metal silicate concentration of, for example, 20 wt.%, one of, for example, only 5 wt.%. Utilizing this surprising effect, the abovementioned objects and further objects such as can be seen from the further description and the examples can be achieved.

The invention provides coated particulate peroxygen compounds, in particular coated sodium percarbonate particles, with a delayed release of the active oxygen in the aqueous phase, comprising at least two shell layers on a core of the peroxygen compound, wherein an innermost layer, which makes up 2 to 20 wt.%, based on the coated particles, comprises at least one hydrate-forming inorganic salt and an outer layer comprises an alkali metal silicate with a modulus of SiO₂ to M₂O (M = alkali metal) of greater than 2.5, in particular greater than 3, characterized in that the outer layer comprises as the main component 0.2 to 3 wt.%, based on the coated particles, of an alkali metal silicate and has been prepared using an aqueous solution containing alkali metal silicate with a concentration in the range from 2 to 20 wt.% alkali metal silicate.

The subclaims of the coated particles relate to preferred embodiments, and in particular to coated sodium percarbonate particles.

The coated sodium percarbonate particles according to the invention can have a sodium percarbonate core which has been produced by any desired preparation process and can comprise stabilizers which are known per se, such as magnesium salts, silicates and phosphates. Preparation processes which are conventional in practice are, in particular, so-called crystallization processes, and fluidized bed spray granulation processes. In the crystallization processes, hydrogen peroxide and sodium carbonate are reacted in an aqueous phase to give sodium percarbonate and, after crystallization, the latter is separated off from the aqueous mother liquor. While in earlier processes sodium percarbonate was crystallized out in the presence of a relatively high concentration of an inert salt, such as sodium chloride, processes have since been disclosed in which the crystallization can also take place in the absence of a salting-out agent - reference is made to EP-A 0 703 190 by way of example.

In fluidized bed spray granulation for the preparation of sodium percarbonate, an aqueous hydrogen peroxide solution and an aqueous soda solution are sprayed on to sodium percarbonate seeds, which are in a fluidized bed, and at the same time water is evaporated. The granules which grow in the fluidized bed are taken off from the fluidized bed in total or with grading. The WO specification 95/06615 is referred to as an example of fluidized bed spray granulation.

Finally, sodium percarbonate which has been produced by a process comprising bringing solid soda or a hydrate thereof into contact with an aqueous hydrogen peroxide solution and drying can also be the core of particles according to the invention.

In respect of a high internal stability of the sodium percarbonate core in the presence of detergent constituents, it is particularly expedient if the average particle diameter is greater than 0.5 mm, and particularly preferably in the range from 0.5 to 1 mm. The particle spectrum expediently contains substantially no particles smaller than 0.2 mm.

Preferably the fraction of particles with a diameter smaller than 0.4 mm is less than 10 wt.%, particularly preferably less than 5 wt.%.

The diameter of the sodium percarbonate particles which are coated with at least two layers is only slightly greater than that of the sodium percarbonate core. In general, the thickness of the total coating of the sodium percarbonate core is less than 20 µm. The layer thickness of the layers, of which there are at least two, is preferably in the range from 2 to 15 µm, in particular 4 to 10 µm. Since the amount of the innermost shell layer of the sodium percarbonate particles coated according to the invention as a rule makes up a significantly greater proportion than the outer layer comprising alkali metal silicate, the thickness of the innermost layer is also greater than that of the outer layer comprising alkali metal silicate.

The term "outer shell layer comprising alkali metal silicate" means either the outermost shell layer of a coating comprising at least two layers or a shell layer which in its turn can be covered by and can cover one or more layers.

Although in the following description individual layers are referred to, analogously to in the prior art, it should be noted that the constituents of the layers lying on top of one another can pass into one another at least in the boundary region. This at least partial penetration results from the fact the during coating of sodium percarbonate particles which have an innermost shell layer, this shell layer is at least partly dissolved on the surface when a solution which contains a shell component(s) of a second shell layer is sprayed on.

The coating of the sodium percarbonate is carried out in a manner known per se. In principle, the particles to be coated are brought into contact once or several times, as uniformly as possible, with a solution containing one or more shell components, and are dried at the same time or subsequently. For example, the bringing into contact can be effected on a granulating plate or in a mixer, such as a tumble mixer. The coating is particularly preferably carried out by fluidized bed coating, wherein firstly a first solution containing the shell component(s) for formation of an innermost layer and then a second solution containing the shell component(s) for formation of an outer layer are sprayed on to the sodium percarbonate or sodium percarbonate coated with one or more layers, which is in a fluidized bed, and are dried at the same time with the fluidized bed gas. The fluidized bed gas can be any desired gas, in particular air, air heated directly with a combustion gas and with a CO₂ content in the range from, for example, 0.1 to about 15%, pure CO₂, nitrogen and inert gases. Reference is made to the documents acknowledged in the introduction for a detailed description of fluidized bed coating.

The sodium percarbonate particles according to the invention comprise, in the innermost shell layer, at least one inorganic salt which is capable of hydrate formation. In addition to this, the innermost shell layer can also comprise other inorganic salts and/or organic compounds which have a stabilizing action, such as alkali metal salts of carboxylic acids or hydroxycarboxylic acids. The innermost shell layer particularly preferably comprises one or more salts from the series consisting of alkali metal sulfates, alkali metal carbonates, alkali metal bicarbonates, alkali metal borates and alkali metal perborates. Although these salts can be both lithium salts, sodium salts and potassium salts, the sodium salts are preferred.

According to an alternative embodiment, the innermost layer can also comprise magnesium sulfate, by itself or as a mixture with one or more of the abovementioned salts.

According to a particularly preferred embodiment, the innermost shell layer substantially comprises sodium sulfate, which can also be present in part in the hydrated form. The term "substantially" is understood as meaning that sodium bicarbonate or a double salt of sodium bicarbonate, such as sesquicarbonate or Wegscheider salt, can be contained at least in the boundary layer between the sodium percarbonate core and the innermost layer.

The innermost shell layer of coated sodium percarbonate particles according to the invention in general makes up 2 to 20 wt.%, based on the coated sodium percarbonate. The shell amount stated is the shell in the hydrate-free form. The innermost shell layer preferably makes up 3 to 10 wt.%, particularly preferably 4 to 8 wt.%, based on the coated sodium percarbonate and calculated as the non-hydrated form. Since the innermost shell layer comprises a hydratable inorganic salt, the shell amount can increase by storage in a damp atmosphere due to hydrate formation.

Sodium percarbonate particles coated according to the invention comprise one or more outer layers on the innermost layer. One of these outer layers, preferably that which is arranged directly on the innermost shell layer, is the layer according to the invention comprising alkali metal silicate. The module of the alkali metal silicate in the solution containing alkali metal silicate used to build up this layer is greater than 2.5, and is preferably in the range from 3 to 5, and particularly preferably in the range from 3.2 to 4.2. The modulus is the molar ratio of SiO₂ to M₂O, wherein M represents an alkali metal, and thus represents lithium, sodium or potassium or a mixture of alkali metals. Sodium silicate is preferred.

According to a particularly preferred embodiment of the invention, the outer layer comprising alkali metal silicate is a layer which substantially comprises alkali metal silicate, sodium silicate being particularly preferred. The term "alkali metal silicate", as can be seen from consideration of the modulus, is to be understood as meaning that this is to be understood as meaning all alkali metal silicates which give on average the modulus stated. The alkali metal silicate solution to be used as the spray solution is preferably a so-called water-glass solution, in particular a sodium water-glass solution.

If the innermost shell layer comprises constituents which have an alkaline action, such as sodium carbonate, the modulus on an alkali metal silicate layer on the innermost shell layer can become somewhat lower and therefore shorten the dissolving time, since interactions between the constituents of the shell layers cannot be ruled out at least in the boundary region.

For the formation of the shell layer comprising alkali metal silicate it is also possible to use a gas enriched in CO₂ or pure CO₂ as the fluidized bed gas or as the propellant gas for the spray solution containing alkali metal silicate. By this means the pH of the alkali metal silicate solution is lowered during the coating, as a result of which the modulus and consequently the dissolving time of the coated sodium percarbonate are increased.

According to a particularly preferred embodiment of the invention, the innermost shell layer comprises substantially sodium sulfate and the outer layer adjacent thereto comprises substantially sodium silicate, the modulus of which is in the range from 3 to 5, preferably 3.2 to 4.2. Particularly preferably, the innermost shell layer comprises 2 to 10 wt.% sodium sulfate (calculated as the hydrate-free form) and the outer layer comprises 0.3 to less than 1 wt.% sodium silicate with the abovementioned modulus, in each case based on the coated sodium percarbonate.

Although sodium percarbonate particles with at least two shell layers, one shell layer of which comprises sodium silicate or substantially comprises sodium silicate, are known in the prior art, the inventors of the present Application found for the first time that the sequence of the layer arrangement has a considerable influence on the rate of solution of the coated sodium percarbonate particles. It is thus essential in the process according to the invention that the layer comprising alkali metal silicate is not directly on the sodium percarbonate core, but is arranged as an outer layer, preferably as a second layer. By the layer arrangement according to the invention, products which release sodium percarbonate in the aqueous phase considerably more slowly than products with the reverse layer sequence such as are already known from the prior art can be obtained with the same amount of alkali metal silicate and same modulus and the same concentration of the spray solution containing alkali metal silicate. By the arrangement according to the invention of the layers it is thus possible for products with a long dissolving time already to be obtained with a very small amount of alkali metal silicate in the shell layer. In the prior art, a considerably higher amount of silicate was necessary to achieve the same dissolving time. By the smaller amount of alkali metal silicate with a simultaneously long delay in the release of the sodium percarbonate, it has been possible to avoid the problem of greying of laundry.

A further advantage which results from the low amount of silicate shell is that because of the very thin alkali metal silicate shell layer, only a relatively small amount of dust comprising alkali metal silicate can develop in the context of the fluidized bed coating. This small amount of dust can be introduced into the continuous process for the preparation of sodium percarbonate by fluidized bed spray granulation without adversely changing the properties of the sodium percarbonate.

A water-glass solution of conventional quality can be used in the process according to the invention, that is to say no specifically purified, for example iron-depleted, water-glass solution has to be used, because the shell layer comprising alkali metal silicate is not directly on the sodium percarbonate core and only little dust is obtained.

It is assumed that the layer sequence according to the invention is one of the reasons why only a small amount of alkali metal silicate is necessary. By application of the innermost layer a very much smoother surface is evidently generated compared with the surface of the sodium percarbonate core, so that a closed effective shell layer can be produced with a small amount of alkali metal silicate.

A further feature of the coated sodium percarbonate particles which is essential to the invention is that an aqueous solution containing alkali metal silicate with a concentration in the range from 2 to 20 wt.%, preferably 3 to 15 wt.% and particularly preferably 5 to 10 wt.% of alkali metal silicate is used for the preparation of the outer shell layer comprising alkali metal silicate. According to a particularly preferred embodiment, the coated sodium percarbonate particles according to the invention are prepared using a sodium water-glass solution with a concentration of 2 to 20 wt.%, in particular 5 to 10 wt.%, and a modulus in the range from 3 to 5, and preferably 3.2 to 4.2.

Finally, it has also been found that the rate of spraying, that is to say the spraying time for application of a predetermined amount of alkali metal silicate, has an influence on the dissolving time: By increasing the spraying time it is possible to increase the dissolving time.

The coated sodium percarbonate particles comprise, in an outer layer, 0.2 to 3 wt.% alkali metal silicate with a modulus of greater than 2.5, and preferably greater than 3. A further lowering of the amount of alkali metal silicate is possible in principle, but the effect of increasing the dissolving time is then only moderate. In the same way, an increase above 3 wt.% alkali metal silicate, for example > 3 to 5 wt.%, is possible if a particularly long dissolving time is desired for particular use purposes.

According to a preferred embodiment, the coated sodium percarbonate particles comprise 0.2 to 1 wt.%, and preferably 0.3 to less than 1 wt.% alkali metal silicate, preferably sodium silicate, in an outer shell layer. Such a product is particularly suitable for use in enzyme-containing solid detergents. In spite of the only small layer thickness of the outer layer comprising alkali metal silicate, there is a very effective lengthening of the dissolving time and therefore delayed release of sodium percarbonate. In the case of, for example, an average particle diameter of 0.8 mm and a sodium silicate layer of 0.5 to 1 wt.%, the layer thickness is equal to or less than 1 µm.

Particularly preferred coated sodium percarbonate particles, such as, in particular, those which comprise sodium sulfate as the innermost shell layer and 0.3 to less than 1 wt.% sodium silicate as the outer shell layer, have a dissolving time of more than 5 minutes, in particular more than 10 minutes. Dissolving time here means that time which is determined by conductometric monitoring for 95% dissolution in water at 15°C at a concentration of 2 g/l.

In addition to the innermost shell layer and an outer shell layer comprising sodium silicate, it may be expedient if the coated particles have one or more further shell layers, which can be closed or non-closed, on the outer layer comprising alkali metal silicate, which is preferably a pure sodium silicate layer.

According to a preferred embodiment, the shell component of an outermost shell layer is a finely divided inorganic or organic free-flowing auxiliary substance which completely or partly covers the surface of the particles. The risk of caking of sodium percarbonate particles which have a layer of substantially alkali metal silicate on an innermost shell layer is avoided by the presence of a free-flowing auxiliary substance. Particularly suitable free-flowing auxiliary substances are finely divided inorganic compounds from the series consisting of oxides, mixed oxides and silicates; these substances can be of natural or synthetic origin.

Nanoscale substances, such as precipitated and pyrogenic silicas, aluminium oxide and titanium dioxide, which can be either hydrophilic or hydrophobic, are particularly suitable. Among the silicatic substances, pyrogenically prepared aluminium silicate and montmorillonite are mentioned by way of example. Such substances have a BET surface area of preferably 20 to 500 m²/g, so that only a very small amount used of such substances is sufficient to form an effective shell layer.

The preparation of the coated particles, in particular the coated sodium percarbonate particles, comprises coating processes which are known per se, preferably fluidized bed coating, at least two shell layers being formed. The process is characterized in that for the preparation of an outer shell layer comprising alkali metal silicate as the main component, an aqueous solution containing alkali metal silicate with an alkali metal silicate concentration in the range from 2 to 20 wt.% and a modulus of SiO₂ to M₂O (M = alkali metal) of greater than 2.5 is used and this solution is sprayed on to sodium percarbonate particles which have at least one innermost shell layer of at least one hydrate-forming shell component in a fluidized bed, with simultaneous evaporation of water, until the outer layer comprises 0.2 to 3 wt.% alkali metal silicate.

According to a preferred embodiment, an alkali metal silicate solution with a modulus in the range from 3 to 5 with an alkali metal silicate content in the range from 2 to 15 wt.%, and in particular 5 to 10 wt.%, is used to form the shell layer comprising alkali metal silicate. Preferably, such a solution, which is here in particular a sodium water-glass solution, is sprayed on to sodium percarbonate particles comprising at least one innermost shell layer in an amount such that the outer shell layer comprises 0.3 to 2 wt.%, preferably 0.3 to less than 1 wt.% alkali metal silicate, in particular sodium silicate.

So that the capacity of a unit for fluidized bed coating is not reduced too much by the use of the dilute alkali metal silicate solutions, it is possible to keep the spraying time constant by increasing the temperature of the fluidized bed gas and/or the flow rate thereof. Nevertheless, the increase in dissolving time may not be optimum due to this measure.

According to one embodiment, a closed or non-closed shell layer can be applied to the outer shell comprising alkali metal silicate as the main component by conventional fluidized bed coating.

According to an alternative and preferred embodiment, a free-flowing auxiliary substance can be applied to sodium percarbonate particles coated with at least two layers by bringing these into contact with the very finely divided free-flowing auxiliary substances. The amount of free-flowing auxiliary substance employed is preferably significantly below 1 wt.%, and particularly preferably below 0.5 wt.%. For example, it is possible to bring the coated sodium percarbonate which has been taken off from the coating unit into contact with the pulverulent free-flowing auxiliary substance in a fall pipe or a pipe for pneumatic conveying or in a mixer, the auxiliary substance being adsorbed on to the surface of the coated sodium percarbonate particles.

By the process according to the invention it is possible for coated sodium percarbonate particles which release sodium percarbonate and therefore active oxygen in the aqueous phase in a controlled manner to be obtained in a reliable manner. The dissolving time of the coated sodium percarbonate can thus be matched in a targeted manner to the use requirements of an enzyme-containing detergent.

The invention also provides the use of the particles according to the invention, in particular the coated sodium percarbonate particles, as a bleaching agent in detergents, bleaching compositions and cleaning compositions. The detergents, bleaching compositions and cleaning compositions are, in particular, those which comprise at least one enzyme. Such compositions expediently comprise 5 to 50 wt.%, preferably 10 to 40 wt.%, and in particular 15 to 25 wt.% of the sodium percarbonate coated according to the invention. The particles having a bleaching action which have been coated according to the invention can be employed in detergents, bleaching compositions and cleaning compositions of any desired composition. Such compositions comprise as the main components, in addition to the bleaching component:
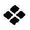 Surface-active agents from the series consisting of cationic, anionic, nonionic, amphoteric and ampholytic surface-active agents.
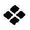 Inorganic and/or organic builders, the main action of which comprises sequestering or complexing of the metal ions responsible for hardness of water. Examples are: zeolites, laminar silicates, polyphosphates, aminopolyacetic acids, aminopolyphosphonic acids and polyoxycarboxylic acids.
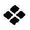 Components having an alkaline action, such as alkanolamines; inorganic electrolytes, such as silicates, carbonates and sulfates.
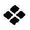 Bleaching activators from the series consisting of N-acyl compounds and O-acyl compounds, such as tetraacetylethylenediamine (TAED) and nonanoyloxybenzenesulfonate (NOBS).
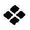 Enzymes, such as, in particular, lipases, cutinases, amylases, neutral and alkaline proteases, esterases, cellulases, pectinases, lactases and peroxidases.
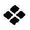 Further constituents of the compositions can be stabilizers for peroxides, such as, in particular, magnesium salts, antiredeposition agents, optical brighteners, foam inhibitors, disinfectants, corrosion inhibitors, fragrances, dyestuffs and agents for regulating the pH.

The invention is illustrated further with the aid of the following examples. The experiments show the completely unexpected effect of the use concentration of the sodium water-glass solution for the formation of the outer shell layer, the similarly unexpectedly high effect due to a very thin sodium silicate layer, and the influence of the modulus and of the layer sequence.

### Examples (general instructions)

Unless stated otherwise, sodium percarbonate with an average particle diameter of 750 µm and a fine particle content (smaller than 200 µm) of substantially 0% is coated with a first shell layer of substantially sodium sulfate in a fluidized bed in accordance with WO 95/19890. In each case 1,000 g sodium percarbonate, which has a shell layer of 6 wt.% sodium sulfate, based on the coated product and calculated as the hydrate-free form, were coated. The product coated in this way was coated with a water-glass solution in a fluidized bed coating unit (Strea 1 - Aeromatic), which resulted in a second shell layer. Spraying was carried out at a fluidized bed temperature of about 60°C. Air served as the fluidized bed gas at an intake temperature in the region of about 100°C. After the spraying the feed air temperature was lowered somewhat and after-drying was carried out at a fluidized bed temperature of 75°C.

The amounts employed, the modulus and the concentrations of sodium water-glass, as well as the dissolving times in minutes (2 g of product/l of water, 15°C, 95% dissolution determination conductometrically) can be seen from the following tables.

### Examples 1 to 3

A sodium water-glass solution (Na-WG) diluted with water and with a modulus of 3.35 was employed for the coating. The concentration of the solution to be sprayed was varied. A commercially available Na water-glass solution with a solids content of 36 wt.% was used to prepare the spray solutions. The sodium percarbonate coated with one layer was in each case coated with 0.75 wt.% sodium silicate (modulus 3.35).

The spraying time in examples 1 to 3 was in each case about 20 minutes. The dissolving time as a function of the concentration of the spray solution follows from table 1. It is found that the dissolving time increases markedly with a decreasing Na-WG concentration in the spray solution, that is to say sodium percarbonate is released from the coated product in the aqueous phase in an increasingly delayed manner.

**Table 1:**

| Example no. | Na-WG concentration (wt.%) | Dissolving time (min) |
|---|---|---|
| 1 | 20 | 8.0 |
| 2 | 10 | 14.8 |
| 3 | 5 | 19.6 |

### Examples 4 to 8

In a first stage, sodium percarbonate with a particle spectrum of greater than 0.4 mm was coated with sodium sulfate in a shell amount in the range from 3 to 6 wt.%. The product coated in this way was in each case coated in a second stage using a 10 wt.% sodium water-glass solution, for the preparation of which a commercially available Na-WG solution (different origin to that in examples 1 to 3) with a modulus of 3.34 and a solids concentration of 35.6 wt.% was employed. The amount of sodium silicate in the shell layer was in each case 0.75 wt.%. The results follow from table 2.

**Table 2:**

| Example no. | 1st layer | 2nd layer | Dissolving time (min) |
|---|---|---|---|
| | Shell amount wt.% Na₂SO₄ | Shell amount wt.% Na-WG | |
| 4 * | 6 | 0 | 1.3 |
| 5 | 6 | 0.75 | 11.0 |
| 6 | 5 | 0.75 | 11.0 |
| 7 | 4 | 0.75 | 13.3 |
| 8 | 3 | 0.75 | 14.4 |

| | | | |
|---|---|---|---|
| * not according to the invention | | | |

### Examples 9 and 10

Sodium percarbonate coated with 6 wt.% Na₂SO₄ (innermost layer) was coated with 1.5 and 3.0 wt.% sodium silicate respectively. A commercially available sodium water-glass solution diluted to a solids content of 10 wt.% and with a modulus of 3.34 and a concentration of 35.6 wt.% was employed. The results follow in table 3.

**Table 3:**

| Example no. | Na-WG shell amount (wt.%) | Dissolving time (min) |
|---|---|---|
| 9 | 1.5 | 35 |
| 10 | 3.0 | 80 |

### Examples 11 and 12

Sodium percarbonate was first coated with 0.75 wt.% sodium silicate (1st layer) from a water-glass solution with a modulus of 3.4, and then coated with 6 wt.% sodium sulfate (2nd layer). The sodium silicate layer was produced using a spray solution with 10 wt.% sodium silicate (modulus 3.4). The layer sequence of example E 11 is not according to the invention.

The sodium percarbonate of example E 12 according to the invention coated with two layers was produced employing the same spray solutions and the same sodium percarbonate, but the layer sequence was the reverse, that is to say according to the invention. Table 4 shows the results. The dissolving time of the example which is not according to the invention is considerably shorter than that of the example according to the invention.

**Table 4:**

| Example no. | Sequence of the layers | Dissolving time (min) |
|---|---|---|
| 11 | 1st Na-WG; 2nd Na₂SO₄ | 4.1 |
| 12 | 1st Na₂SO₄; 2nd Na-WG | 11.0 |

### Example 13:

Sodium percarbonate coated with 6 wt.% Na₂SO₄ (corresponding to example 4) was sprayed in a fluidized bed with a 10 wt.% Na water-glass solution, prepared from commercially available Na water-glass with a modulus of 4.1 and a concentration of 28.5 wt.%, to form a second layer. The shell amount of the 2nd layer was 0.75 wt.% sodium silicate.

The dissolving time of the product of example 13 was 21 minutes. The dissolving time of the product prepared analogously but using an Na water-glass solution with a modulus of 3.34 (= example 5) was 11 minutes. The dissolving time thus increases as the modulus increases.

### Examples 14 and 15:

Commercially available sodium percarbonate coated with 6 wt.% Na₂SO₄ (Q35 from Degussa) was coated using a 5 wt.% sodium water-glass solution, prepared from a commercially available Na-WG solution with a modulus of 3.2 and a solids (Na₂O + SiO₂) concentration of 32.9 wt.%. The shell amount and dissolving times follow from table 5.

**Table 5:**

| Example no. | Na-WG shell amount (wt.%) | Dissolving time (min) |
|---|---|---|
| 14 | 0.75 | 21.5 |
| 15 | 0.50 | 14.5 |

### Examples 16 to 18

Commercially available sodium percarbonate coated with 6 wt.% Na₂SO₄ (quality 30 and 35 from the Applicant) was coated in a pilot plant on the 150 kg scale using a 10 wt.% sodium water-glass solution with a modulus of 3.2. Coating was carried out analogously to the process of US Patent Specification 6,239,095. The shell amount of sodium silicate, the particle spectrum and the dissolving times follow from table 6.

**Table 6**

| Example no. | Quality | Shell amount (wt.%) | Dissolving time (min) | D₅₀ (mm) | D₁₀ (mm) | D₉₀ (mm) |
|---|---|---|---|---|---|---|
| 16 | Q 30 | 0.75 | 13.0 | 0.55 | 0.35 | 0.90 |
| 17 | Q 35 | 0.50 | 14.5 | 0.87 | 0.55 | 1.25 |
| 18 | Q 35 | 0.75 | 21.5 | 0.78 | 0.50 | 1.20 |

The examples according to the invention are also distinguished by a delayed release of the active oxygen (dissolving time) due to a high active oxygen stability during storage substantially determined by the innermost layer.

Table 7 shows the storage stability, in a zeolite-containing heavy-duty detergent, of the products of examples 17 and 18 coated with two layers and of the Q35 employed - stored in E2 detergent packs at 35°C, 80% rel. atmospheric humidity. An unexpectedly high increase in stability is obtained by the second layer of sodium silicate, in spite of the small amount employed and therefore the low layer thickness. The differences in the rel. residual Oₐ of examples E17 and E18 lie within the range of variation of the test, and the two products therefore have about the same stability. Table 7:

| Example no. | 2nd layer of Na silicate (wt.%) | Relative residual Oₐ (%) | | TAM value (µw/g) |
|---|---|---|---|---|
| | | after 4 weeks | after 8 weeks | 24h / 60°C |
| Q35 | 0 | 92 | 69 | 23 |
| 17 | 0.50 | 95 | 84 | 11 |
| 18 | 0.75 | 96 | 82 | 11 |

The TAM values (TAM = thermal activity monitor) show that by the application of the very thin sodium silicate layer to an NaPc coated with sodium sulfate the TAM value decreases very markedly in an unforeseeable manner. The internal stability of the coated particles is therefore increased significantly.

## Claims

1. Coated particulate peroxygen compounds, in particular coated sodium percarbonate particles, with a delayed release of the active oxygen in the aqueous phase, comprising at least two shell layers on a core of the peroxygen compound, wherein an innermost layer, which makes up 2 to 20 wt.%, based on the coated particles, comprises at least one hydrate-forming inorganic salt and an outer layer comprises an alkali metal silicate with a modulus of SiO₂ to M₂O (M = alkali metal) of greater than 2,5,
**characterized in that**
the outer layer comprises as the main component alkali metal silicate in an amount of 0.2 to 3 wt.%, based on the coated particles, and has been prepared using an aqueous solution containing alkali metal silicate with a concentration in the range from 2 to 20 wt.% alkali metal silicate.

2. Coated particles according to claim 1,
**characterized in that**
the outer layer has been prepared using an alkali metal silicate solution with a modulus in the range from 3 to 5, in particular 3.2 to 4.2, and a concentration in the range from 3 to 15 wt.%, in particular 5 to 10 wt.%.

3. Coated particles according to one of claims 1 or 2,
**characterized in that**
the outer layer has been prepared using a sodium water-glass solution diluted to 2 to 20 wt.%, in particular 5 to 10 wt.% sodium silicate.

4. Coated particles according to one of claims 1 to 3,
**characterized in that**
the outer shell layer comprising alkali metal silicate comprises 0.3 to less than 1 wt.% alkali metal silicate, based on the coated particles, and the dissolving time (95% dissolution in water at 15°C and 2 g/l) is longer than 5 minutes, in particular longer than 10 minutes.

5. Coated particles according to one of claims 1 to 4,
**characterized in that**
the innermost shell layer makes up 2 to 10 wt.%, calculated as the hydrate-free form and based on the coated particles, and substantially comprises one or more salts from the series consisting of alkali metal sulfates, alkali metal carbonates, alkali metal bicarbonates, mixed salts of sodium bicarbonate, alkali metal borates and alkali metal perborates.

6. Coated particles according to one of claims 1 to 5,
**characterized in that**
they have two or three shell layers, the innermost layer substantially comprising sodium sulfate and a layer on top of this substantially comprising sodium silicates with a modulus in the range from 3 to 5.

7. Coated particles according to claim 6,
**characterized in that**
the innermost layer makes up substantially 2 to 10 wt.% sodium sulfate and an outer layer substantially comprising sodium silicates makes up 0.3 to less than 1 wt.%, in each case based on the coated particles.

8. Coated particles according to one of claims 1 to 7,
**characterized in that**
they have, on an outer layer comprising or preferably substantially consisting of alkali metal silicate, one or more further closed or partly open shell layers.

9. Coated particles according to claim 8,
**characterized in that**
they have on their surface a fine-particled inorganic or organic free-flowing auxiliary substance, in particular a free-flowing auxiliary substance from the series consisting of precipitated and pyrogenic silica, which can be hydrophilic or hydrophobic, aluminium oxide, titanium dioxide, aluminium silicate and montmorillonite.

10. Coated particles according to one of claims 1 to 9,
**characterized in that**
they have an average particle diameter of 0.5 to 1 mm, contain substantially no particles smaller than 0.2 mm and have been coated by fluidized bed coating.

11. Coated particles according to claim 10,
**characterized in that**
they have a D₁₀ value of at least 0.35 mm, in particular of at least 0.5 mm.

12. Coated particles according to claim 10,
**characterized in that**
the fraction of particles with a diameter smaller than 0.4 mm is less than 10 wt.%, in particular less than 5 wt.%.

13. Process for the preparation of coated particulate peroxygen compounds, in particular coated sodium percarbonate particles, according to one of claims 1 to 11,
comprising coating of the particles to be coated, such as, in particular, sodium percarbonate particles, wherein the particles are brought into contact with an aqueous solution containing at least one shell component and are dried and at least two shell layers are formed,
**characterized in that**
for the preparation of an outer shell layer comprising alkali metal silicate as the main component, an aqueous solution containing alkali metal silicate with an alkali metal silicate concentration in the range from 2 to 20 wt.% and a modulus of SiO₂ to M₂O (M = alkali metal) of greater than 2.5 is used and this solution is sprayed on to particles which have at least one innermost shell layer of at least one hydrate-forming shell component, with simultaneous or subsequent evaporation of water, until the outer layer comprises 0.2 to 3 wt.% alkali metal silicate.

14. Process according to claim 13,
**characterized in that**
an alkali metal silicate solution, in particular a sodium water-glass solution, with a content of 3 to 15 wt.%, in particular 5 to 10 wt.% alkali metal silicate, is sprayed on.

15. Process according to claim 13 or 14
**characterized in that**
an innermost layer of 3 to 10 wt.% of substantially sodium sulfate, calculated as the hydrate-free form and based on the coated sodium percarbonate, is applied to sodium percarbonate particles and a sodium water-glass solution substantially comprising sodium silicate with a modulus in the range from 3 to 5 with a concentration of sodium silicate in the range from 5 to 10 wt.% is then sprayed on, and the spraying is ended after application of 0.2 to 3 wt.%, in particular 0.3 to less than 1 wt.% sodium silicate.

16. Process according to one of claims 13 to 15,
**characterized in that**
the outer layer comprising alkali metal silicate is applied by fluidized bed coating to the particles having at least one innermost shell layer.

17. Process according to one of claims 13 to 16,
**characterized in that**
the sodium percarbonate coated with an innermost layer of at least one hydratable salt and an outer layer of alkali metal silicates as the main component is brought into contact with a pulverulent inorganic free-flowing auxiliary substance in an effective amount.

18. Use of coated peroxygen compounds, in particular coated sodium percarbonate particles, according to one of claims 1 to 11 or prepared according to one of claims 13 to 17 as a bleaching component in bleaching compositions, detergents and cleaning compositions, in particular those in which sodium percarbonate is to be released in a delayed manner in the aqueous phase.

## Patentansprüche

1. Umhüllte partikelförmige Persauerstoffverbindungen, insbesondere umhüllte Natriumpercarbonatpartikel mit verzögerter Freisetzung des Aktivsauerstoffs in wässriger Phase, umfassend mindestens zwei Hüllschichten auf einem Kern der Persauerstoffverbindung, wobei eine innerste Schicht, welche 2 bis 20 Gew.-%, bezogen die umhüllten Partikel, ausmacht, mindestens ein hydratbildendes anorganisches Salz und eine äußere Schicht ein Alkalimetallsilikat mit einem Modul SiO₂ zu M₂O (M = Alkalimetall) von größer 2,5 enthält,
**dadurch gekennzeichnet,**
**dass** die äußere Schicht als Hauptkomponente Alkalimetallsilikat in einer Menge von 0,2 bis 3 Gew.-%, bezogen auf die umhüllten Partikel, enthält und unter Verwendung einer Alkalimetallsilikat enthaltenden wässrigen Lösung mit einer Konzentration im Bereich von 2 bis 20 Gew.-% Alkalimetallsilikat hergestellt wurde.

2. Umhüllte Partikel nach Anspruch 1.
**dadurch gekennzeichnet,**
**dass** die äußere Schicht unter Verwendung einer Alkalimetallsilikatlösung mit einem Modul im Bereich von 3 bis 5, insbesondere 3,2 bis 4,2, und einer Konzentration im Bereich von 3 bis 15 Gew.-%, insbesondere 5 bis 10 Gew.-%, hergestellt wurde.

3. Umhüllte Partikel nach einem der Ansprüche 1 oder 2,
**dadurch gekennzeichnet,**
**dass** die äußere Schicht unter Verwendung einer auf 2 bis 20 Gew.-%, insbesondere 5 bis 10 Gew.-% Natriumsilikat verdünnten Natrium-Wasserglaslösung hergestellt wurde.

4. Umhüllte Partikel nach einem der Ansprüche 1 bis 3,
**dadurch gekennzeichnet,**
**dass** die Alkalimetallsilikat enthaltende äußere Hüllschicht 0,3 bis weniger als 1 Gew.-% Alkalimetallsilikat, bezogen auf die umhüllten Partikel, enthält und die Lösezeit (95 % Auflösung in Wasser bei 15 °C und 2 g/l) mehr als 5 Minuten, insbesondere mehr als 10 Minuten, beträgt.

5. Umhüllte Partikel nach einem der Ansprüche 1 bis 4,
**dadurch gekennzeichnet,**
**dass** die innerste Hüllschicht 2 bis 10 Gew.-%, berechnet hydratfrei und bezogen auf die umhüllten Partikel, ausmacht und im wesentlichen aus einem oder mehreren Salzen aus der Reihe der Alkalimetallsulfate, Alkalimetallcarbonate, Alkalimetallbicarbonate, gemischten Salzen von Natriumbicarbonat, Alkalimetallborate und Alkalimetallperborate besteht.

6. Umhüllte Partikel nach einem der Ansprüche 1 bis 5,
**dadurch gekennzeichnet,**
**dass** sie zwei oder drei Hüllschichten aufweisen, wobei die innerste Schicht im wesentlichen aus Natriumsulfat und eine darüber liegende Schicht im wesentlichen aus Natriumsilikaten mit einem Modul im Bereich von 3 bis 5 besteht.

7. Umhüllte Partikel nach Anspruch 6,
**dadurch gekennzeichnet,**
**dass** die innerste Schicht im wesentlichen 2 bis 10 Gew.-% Natriumsulfat und eine im wesentlichen aus Natriumsilikaten bestehende äußere Schicht 0,3 bis weniger als 1 Gew.-%, jeweils bezogen auf die umhüllten Partikel, ausmacht.

8. Umhüllte Partikel nach einem der Ansprüche 1 bis 7,
**dadurch gekennzeichnet,**
**dass** sie auf einer Alkalimetallsilikat enthaltenden oder bevorzugt im wesentlichen daraus bestehenden äußeren Schicht eine oder mehrere weitere geschlossene oder teilweise offene Hüllschichten aufweisen

9. Umhüllte Partikel nach Anspruch 8,
**dadurch gekennzeichnet,**
**dass** sie auf ihrer Oberfläche ein feinteiliges anorganisches oder organisches Rieselhilfsmittel, insbesondere ein Rieselhilfsmittel aus der Reihe gefällter und pyrogener Kieselsäuren, welche hydrophil oder hydrophob sein können, Aluminiumoxid, Titandioxid, Aluminiumsilikat und Montmorillonit, enthalten.

10. Umhüllte Partikel nach einem der Ansprüche 1 bis 9,
**dadurch gekennzeichnet,**
**dass** sie einen mittleren Partikeldurchmesser von 0,5 bis 1 mm aufweisen, im wesentlichen keine Partikel kleiner 0,2mm enthalten und durch Wirbelschichtcoating umhüllt wurden.

11. Umhüllte Partikel nach Anspruch 10,
**dadurch gekennzeichnet,**
**dass** sie einen D₁₀-Wert von wenigstens 0,35 mm, insbesondere von wenigstens 0,5 mm, aufweisen.

12. Umhüllte Partikel nach Anspruch 10,
**dadurch gekennzeichnet,**
**dass** der Anteil an Partikeln mit einem Durchmesser von kleiner als 0,4 mm bei weniger als 10 Gew.-%, insbesondere bei weniger als 5 Gew.-%, liegt.

13. Verfahren zur Herstellung von umhüllten partikelförmigen Persauerstoffverbindungen, insbesondere umhüllten Natriumpercarbonatpartikeln, gemäß einem der Ansprüche 1 bis 11,
umfassend Beschichten der zu umhüllenden Partikel, wie insbesondere Natriumpercarbonatpartikel, wobei die Partikel mit einer mindestens eine Hüllkomponente enthaltenden wässrigen Lösung kontaktiert und getrocknet werden und mindestens zwei Hüllschichten gebildet werden,
**dadurch gekennzeichnet,**
**dass** man zur Herstellung einer Alkalimetallsilikat als Hauptkomponente enthaltenden äußeren Hüllschicht eine Alkalimetallsilikat enthaltende wässrige Lösung mit einer Alkalimetallsilikatkonzentration im Bereich von 2 bis 20 Gew.-% und einem Modul SiO₂ zu M₂O (M-Alkalimetall) von größer 2,5 verwendet und diese Lösung auf Partikel, welche mindestens eine innerste Hüllschicht aus mindestens einer hydratbildenden Hüllkomponente aufweisen, unter gleichzeitigem oder nachfolgendem Verdampfen von Wasser aufsprüht bis die äußere Schicht 0,2 bis 3 Gew.-% Alkalimetallsilikat enthält.

14. Verfahren nach Anspruch 13,
**dadurch gekennzeichnet,**
**dass** man eine Alkalimetallsilikatlösung, insbesondere eine Natrium-Wasserglaslösung, mit einem Gehalt von 3 bis 15 Gew.-%, insbesondere 5 bis 10 Gew.-% Alkalimetallsilikat aufsprüht.

15. Verfahren nach Anspruch 13 oder 14,
**dadurch gekennzeichnet,**
**dass** man auf Natriumpercarbonatpartikel eine innerste Schicht aus 3 bis 10 Gew.-% von im wesentlichen Natriumsulfat, berechnet hydratfrei und bezogen auf das umhüllte Natriumpercarbonat, aufbringt und dann eine im wesentlichen Natriumsilikat mit einem Modul im Bereich von 3 bis 5 enthaltende Natrium-Wasserglaslösung mit einer Konzentration an Natriumsilikat im Bereich von 5 bis 10 Gew.-% aufsprüht und das Besprühen nach Aufbringen 0,2 bis 3 Gew.-%, insbesondere von 0,3 bis weniger als 1 Gew.-% Natriumsilikat beendet.

16. Verfahren nach einem der Ansprüche 13 bis 15,
**dadurch gekennzeichnet,**
**dass** man die Alkalimetallsilikat enthaltende äußere Schicht durch Wirbelschichtcoating auf die mindestens eine innerste Hüllschicht aufweisende Partikel aufbringt.

17. Verfahren nach einem der Ansprüche 13 bis 16,
**dadurch gekennzeichnet,**
**dass** man das mit einer innersten Schicht aus mindestens einem hydratisierbaren Salz und einer äußeren Schicht aus Alkalimetallsilikaten als Hauptkomponente beschichtete Natriumpercarbonat mit einem pulverförmigen anorganischen Rieselhilfsmittel in wirksamer Menge in Kontakt bringt.

18. Verwendung von umhüllten Persauerstoffverbindungen, insbesondere umhüllten Natriumpercarbonatpartikeln, gemäß einem der Ansprüche 1 bis 11 oder hergestellt nach einem der Ansprüche 13 bis 17 als Bleichkomponente in Bleich-, Wasch- und Reinigungsmitteln, insbesondere solchen, in welchem Natriumpercarbonat in wässriger Phase verzögert freigesetzt werden soll.

## Revendications

1. Composés peroxygénés particulaires enrobés, en particulier particules de percarbonate de sodium enrobées, présentant une libération retardée de l'oxygène actif dans la phase aqueuse, comprenant au moins deux couches d'enveloppe sur un noyau du composé peroxygéné, dans lesquels une couche interne, qui représente 2 à 20 % en poids, par rapport aux particules enrobées, comprend au moins un sel inorganique formant un hydrate et une couche externe comprend un silicate de métal alcalin ayant un module SiO₂/M₂O (M = métal alcalin) de plus de 2,5,
**caractérisés en ce que** la couche externe comprend comme principal constituant un silicate de métal alcalin à raison de 0,2 à 3 % en poids, par rapport aux particules enrobées, et a été préparée, au moyen d'une solution aqueuse contenant du silicate de métal alcalin à une concentration dans la gamme de 2 à 20 % en poids de silicate de métal alcalin.

2. Particules enrobées selon la revendication 1,
**caractérisées en ce que** la couche externe a été préparée au moyen d'une solution de silicate de métal alcalin possédant un module dans la gamme de 3 à 5, en particulier de 3,2 à 4,2, et une concentration dans la gamme de 3 à 15 % en poids, en particulier de 5 à 10 % en poids.

3. Particules enrobées selon l'une des revendications 1 ou 2, **caractérisées en ce que** la couche externe a été préparée au moyen d'une solution de verre soluble à base de soude diluée à 2 à 20 % en poids, en particulier à 5 à 10 % en poids de silicate de sodium.

4. Particules enrobées selon l'une des revendications 1 à 3, **caractérisées en ce que** la couche d'enveloppe externe comprenant du silicate de métal alcalin comprend 0,3 à moins de 1 % en poids de silicate de métal alcalin, par rapport aux particules enrobées, et le temps de dissolution (dissolution à 95% dans de l'eau à 15°C et 2 g/l) est supérieur à 5 minutes, en particulier supérieur à 10 minutes.

5. Particules enrobées selon l'une des revendications 1 à 4, **caractérisées en ce que** la couche d'enveloppe interne représente 2 à 10 % en poids, le calcul étant fait par rapport à la forme sans hydrate et sur la base des particules enrobées, et comprend essentiellement un ou plusieurs sels de la série constituée par les sulfates de métaux alcalins, les carbonates de métaux alcalins, les bicarbonates de métaux alcalins, les mélanges de sels de bicarbonate de sodium, les borates de métaux alcalins et les perborates de métaux alcalins.

6. Particules enrobées selon l'une des revendications 1 à 5, **caractérisées en ce qu'**elles possèdent deux ou trois couches d'enveloppe, la couche interne comprenant essentiellement du sulfate de sodium et une couche par-dessus celle-ci comprenant essentiellement des silicates de sodium ayant un module dans la gamme de 3 à 5.

7. Particules enrobées selon la revendication 6,
**caractérisées en ce que** la couche interne représente essentiellement 2 à 10 % en poids de sulfate de sodium et une couche externe comprenant essentiellement des silicates de sodium représente 0,3 à moins de 1 % en poids, dans chaque cas par rapport aux particules enrobées.

8. Particules enrobées selon l'une des revendications 1 à 7, **caractérisées en ce qu'**elles possèdent, sur une couche externe comprenant du ou de préférence constituée essentiellement de silicate de métal alcalin, une ou plusieurs autres couches d'enveloppe fermées ou partiellement ouvertes.

9. Particules enrobées selon la revendication 8, **caractérisées en ce qu'**elles ont, sur leur surface, une substance auxiliaire fluide à fines particules, inorganique ou organique, en particulier une substance auxiliaire fluide de la série constituée de silice précipitée et pyrogène, qui peut être hydrophile ou hydrophobe, d'oxyde d'aluminium, de dioxyde de titane, de silicate d'aluminium et de montmorillonite.

10. Particules enrobées selon l'une des revendications 1 à 9, **caractérisées en ce qu'**elles ont un diamètre moyen de particule de 0,5 à 1 mm, elles ne contiennent pratiquement pas de particules plus petites que 0,2 mm et elles ont été enrobées par enrobage en lit fluidisé.

11. Particules enrobées selon la revendication 10, **caractérisées en ce qu'**elles ont une valeur D₁₀ d'au moins 0,35 mm, en particulier d'au moins 0,5 mm.

12. Particules enrobées selon la revendication 10, **caractérisées en ce que** la fraction de particules ayant un diamètre de moins de 0,4 mm est inférieure à 10 % en poids, en particulier inférieure à 5 % en poids.

13. Procédé de préparation de composés peroxygénés particulaires enrobés, en particulier de particules de percarbonate de sodium enrobées, selon l'une des revendications 1 à 11,
comprenant l'enrobage des particules à enrober, telles que, en particulier, de particules de percarbonate de sodium, où les particules sont mises en contact avec une solution aqueuse contenant au moins un constituant d'enveloppe et sont séchées, et au moins deux couches d'enveloppe sont formées, **caractérisé en ce que**, pour la préparation d'une couche d'enveloppe externe comprenant du silicate de métal alcalin comme principal constituant, on utilise une solution aqueuse contenant du silicate de métal alcalin avec une concentration en silicate de métal alcalin dans la gamme de 2 à 20 % en poids et un module SiO₂/M₂O (M = métal alcalin) de plus de 2,5 et on pulvérise cette solution sur des particules qui présentent au moins une couche d'enveloppe interne d'au moins un constituant d'enveloppe formant un hydrate, avec évaporation simultanée ou subséquente de l'eau, jusqu'à ce que la couche externe comprenne 0,2 à 3 % en poids de silicate de métal alcalin.

14. Procédé selon la revendication 13, **caractérisé en ce que** l'on pulvérise sur une solution de silicate de métal alcalin, en particulier une solution de verre soluble à base de soude, ayant une teneur de 3 à 15 % en poids, en particulier de 5 à 10 % en poids, de silicate de métal alcalin.

15. Procédé selon la revendication 13 ou 14, **caractérisé en ce que** l'on applique une couche interne de 3 à 10 % en poids de sulfate de sodium essentiellement, le calcul étant fait par rapport à la forme sans hydrate et sur la base du percarbonate de sodium enrobé, sur les particules de percarbonate de sodium, et on pulvérise ensuite sur une solution de verre soluble à base de soude comprenant essentiellement du silicate de sodium ayant un module dans la gamme de 3 à 5 avec une concentration de silicate de sodium dans la gamme de 5 à 10 % en poids, et on arrête la pulvérisation après avoir appliqué 0,2 à 3 % en poids, en particulier 0,3 à moins de 1 % en poids, de silicate de sodium.

16. Procédé selon l'une des revendications 13 à 15, **caractérisé en ce que** la couche externe comprenant du silicate de métal alcalin est appliquée par enrobage en lit fluidisé sur les particules comportant au moins une couche d'enveloppe interne.

17. Procédé selon l'une des revendications 13 à 16, **caractérisé en ce que** le percarbonate de sodium enrobé avec une couche interne d'au moins un sel hydratable et une couche externe de silicates de métaux alcalins comme principal constituant est mis en contact avec une substance auxiliaire inorganique pulvérulente fluide en quantité efficace.

18. Utilisation de composés peroxygénés enrobés, en particulier de particules de percarbonate de sodium enrobées, selon l'une des revendications 1 à 11 ou préparés selon l'une des revendications 13 à 17, comme constituant de blanchiment dans des compositions de blanchiment, des détergents et des compositions nettoyantes, en particulier celles dans lesquelles du percarbonate de sodium doit être libéré dans la phase aqueuse de manière retardée.
